# FASCICULE DE BREVET EUROPEEN

(11) **EP 1 925 511 B1**
(45) Date de publication et mention de la délivrance du brevet: **26.08.2009**
(21) Numéro de dépôt: 07119638.0
(22) Date de dépôt: 30.10.2007
(51) Int. Cl.: B60R 21/34

(54) **Ecran de protection pour piéton obtenu par surmoulage**
Schutzschirm für Fußgänger erstellt durch Abformen von einem Gussstück
Pedestrian guard obtained by overmoulding

(30) Priorité: 23.11.2006 FR 0655061
(43) Date de publication de la demande: 28.05.2008
(73) Titulaire: PEUGEOT CITROËN AUTOMOBILES S.A., 78140 Vélizy Villacoublay (FR)
(72) Inventeur: Massieux, Michael, 51000 Chalons en Champagne (FR); Doulat, Anne, 95800 Poissy (FR); Monin, Martine, 92000 Nanterre (FR)
(74) Mandataire: Ménès, Catherine

(56) Documents cités:
- EP-A- 1 695 872
- DE-A1- 10 121 683
- DE-A1-102004 017 362
- DE-U1-202004 001 681
- FR-A1- 2 851 973
- FR-A1- 2 858 284

## Description

Le domaine technique de l'invention concerne les écrans de protection situés entre le moteur d'un véhicule automobile et le capot, et servant de couche intermédiaire pour amortir l'impact de la tête d'un piéton sur le moteur, suite à un choc accidentel. En effet, dans une certaine plage de vitesses, la collision entre un véhicule et un piéton entraîne le pivotement dudit piéton, dont la tête vient percuter le capot sous lequel est logé le moteur. Le capot se déforme sous l'impact, et la tête vient alors heurter le moteur, constituant une pièce lourde et indéformable, augmentant considérablement les risques de fracture du crâne. L'invention consiste à mettre en oeuvre un écran de protection constitué par des matériaux ayant des propriétés bien identifiées, permettant d'amortir le choc de la tête d'un piéton ou d'être sans influence néfaste sur ledit choc. Accessoirement, l'invention consiste à modifier structurellement une pièce déjà existante sur le moteur et occupant une fonction bien particulière au sein dudit moteur, pour la transformer en un écran de protection vis-à-vis d'un piéton, sans pour autant dénaturer sa fonction originelle. Il s'agit, en fait, d'un écran de protection pour le système d'injection, servant, notamment, à contenir le bruit qu'il produit, et à éviter les projections de gazole sous le capot moteur en cas de fuite dudit gazole.

Les écrans de protection vis-à-vis d'un choc piéton existent et ont déjà fait l'objet de brevet. On peut, par exemple, citer le brevet FR 2858284, qui se rapporte à un dispositif absorbeur de choc comprenant une partie bombée et creuse, de forme sensiblement hémisphérique, et une jupe décalée radialement vers l'extérieur de la partie bombée, ledit dispositif comprenant des évidements longitudinaux. Grâce à sa géométrie particulière, ce dispositif permet d'absorber l'énergie liée à un choc brutal d'un piéton sur le capot d'un véhicule, en cas de collision accidentelle.

Les écrans de protection selon l'invention, qui sont aptes à se déformer sous l'effet d'un impact accidentel de piéton sur le capot d'un véhicule automobile, présentent une alternative au dispositif absorbeur de choc décrit dans l'état de la technique précédent, en mettant en oeuvre des matériaux spécifiques ayant des propriétés de déformation bien identifiées. Ils sont de conception simple, ils demeurent faciles à fabriquer et sont d'encombrement réduit. Ils présentent donc toutes les qualités requises pour rester performants dans les espaces restreints, laissés disponibles sous le capot d'un véhicule automobile.

La présente invention a pour objet un écran de protection recouvrant la partie haute d'un moteur à combustion interne d'un véhicule automobile, et comprenant une protubérance bombée et creuse. La principale caractéristique d'un écran selon l'invention est qu'il possède une assise périphérique constituée par un matériau rigide, la protubérance étant constituée par un matériau déformable pour amortir le choc d'un piéton ou d'être sans influence néfaste sur ledit choc. Avantageusement, l'écran est positionné entre le moteur et le capot du véhicule. Lors d'un choc frontal entre un véhicule automobile et un piéton, ce dernier pivote et vient percuter le capot sous lequel est placé le moteur. L'écran selon l'invention, permet au piéton d'éviter d'impacter directement le moteur, en se déformant et en amortissant le choc. Les risques de blessures graves pour le piéton, telles que des fractures du crâne, s'en trouvent ainsi minimisés. Le terme « assise rigide » signifie que, par rapport aux énergies d'impact mises en jeu, l'assise de l'écran, qui matérialise sa surface de contact avec le moteur ne se déforme pas et reste intacte.

Préférentiellement, la protubérance est placée en position centrale au sein de l'écran. Cette position centrale entraîne une meilleure répartition des efforts au niveau de l'écran en cas de choc, permettant d'asseoir une certaine stabilité positionnelle dudit écran sur le moteur.

De façon préférentielle, l'écran s'étend sur le système d'injection du moteur. Pour cette configuration, l'écran de protection selon l'invention, est constitué par un écran déjà existant sur le moteur, dont la fonction est à la fois de réduire le bruit du système d'injection et d'éviter les projections de gazole en cas de fuite. Cet écran a ainsi été modifié par l'instauration d'une protubérance déformable, pour répondre à des impératifs de sécurité vis-à-vis d'un choc piéton, tout en conservant sa fonction originelle.

De façon avantageuse, le matériau constitutif de l'assise périphérique de l'écran est un polyamide renforcé en fibres de verre. Ce matériau résiste aux sollicitations thermiques élevées.

Selon un autre mode de réalisation préféré de l'invention, le matériau constitutif de l'assise périphérique de l'écran est un polypropylène, plutôt utilisé dans le cas de sollicitations thermiques plus faibles.

Préférentiellement, le matériau constitutif de la protubérance est un élastomère thermoplastique apte à se ramollir sous l'action de la chaleur. Ce matériau est choisi pour son aptitude à la déformation, dans la gamme de contraintes occasionnées par le choc d'un piéton. Il peut également, dans certaines circonstances, être constitué par un élastomère.

Avantageusement, l'écran est réalisé par surmoulage du matériau déformable de la protubérance sur le matériau rigide de l'assise périphérique.

De façon avantageuse, l'assise de l'écran a globalement la forme d'un cadre rectangulaire rigide, présentant une partie externe et une partie interne de plus faible épaisseur, et le matériau déformable est surmoulé sur ladite assise, de part et d'autre de ladite partie interne, de sorte que l'assise présente une épaisseur globalement constante et égale à celle de la partie externe. De cette manière, l'écran possède une surface lisse.

De façon préférentielle, la protubérance est renforcée par des nervures, de manière à ce qu'elle ne s'affaisse pas à haute température. Les nervures peuvent être transversales ou longitudinales, et sont situées sous la protubérance. Avantageusement, elles sont moulées avec la protubérance et sont donc réalisées dans le même matériau que celle-ci. Les nervures constituent ainsi une armature pour la protubérance, en augmentant sa résistance vis-à-vis de certaines sollicitations extérieures

L'invention porte également sur un moteur comprenant un écran de protection conforme à l'invention.

Les écrans de protections selon l'invention présentent l'avantage d'être issus d'une technique de fabrication largement éprouvée, fiable et reproductible. Ils sont donc faciles à mettre en oeuvre et sont donc peu coûteux. De plus, ils sont légers et peu encombrants, et sont donc parfaitement adaptés aux véhicules automobiles, dont les espaces encore disponibles sous le capot sont restreints.

On donne ci-après une description détaillée d'un mode de réalisation préféré d'un écran de protection selon l'invention en se référant aux figures 1 à 2.
- La figure 1 est une vue en perspective d'un écran de protection selon l'invention placé sur un moteur de véhicule automobile.
- La figure 2 est une vue en coupe latérale partielle, d'un écran de protection selon l'invention.

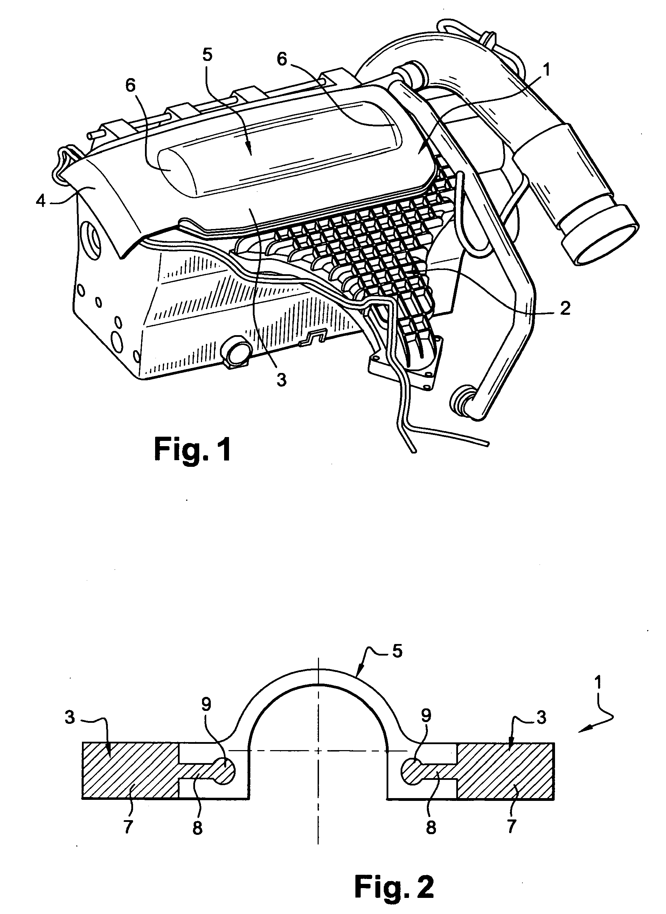

En se référant à la figure 1, un écran 1 de protection selon l'invention est placé en partie haute d'un moteur 2 de véhicule automobile, sur le système d'injection, et en dessous du capot (non représenté). L'écran 1 a la forme d'une pièce globalement plane, recouvrant partiellement ledit moteur 2. De façon plus précise, l'écran 1 possède une assise 3 plane, directement au contact du moteur 2, ladite assise 3 pouvant présenter des rebords 4 incurvés pour épouser au mieux le contour externe du moteur 2, et ainsi être en contact étroit avec celui-ci. L'assise 3 a un contour sensiblement rectangulaire, et entoure une protubérance 5 bombée, située approximativement dans la partie centrale de ladite assise 3. La protubérance 5 émerge de l'assise 3 et se retrouve plus proche du capot que ne l'est ladite assise 3. La protubérance 5 est assimilable à une pièce creuse, de forme allongée et possédant deux extrémités 6 arrondies.

En se référant à la figure 2, l'assise 3 de l'écran 1 a globalement la forme d'un cadre rectangulaire, présentant une partie externe 7 de section rectangulaire, et une partie interne 8 de plus faible épaisseur, et prolongeant ladite partie externe 7 en direction du centre du cadre. Autrement dit, l'assise 3 comprend un cadre externe 7 et un cadre interne 8 au contact dudit cadre externe 7, ledit cadre interne 8 étant placé à mi-hauteur du cadre externe7. Le cadre interne 8 est bordé, au niveau de son contour interne, par un bourrelet 9 rectangulaire, de section sensiblement circulaire. L'assise 3, comprenant les cadres interne 8 et externe 7, est constituée par un polyamide renforcé en fibres de verre, qui est un matériau rigide et indéformable. La protubérance 5, qui est constituée par un élastomère thermoplastique déformable, est surmoulée sur l'assise 3, de part et d'autre du cadre interne 8, de manière à ce que l'épaisseur de l'assise 3 demeure constante et égale à l'épaisseur du cadre externe 7. Ainsi, l'écran 1, qui regroupe l'assise 3 et la protubérance5, présente une surface globalement lisse. Le bourrelet 9 sert de système d'accrochage de la matière déformable surmoulée.

Lors d'un choc entre un véhicule et un piéton, l'écran 1 de protection réagit de la façon suivante :
Le piéton pivote, et vient percuter, tête la première, le capot avant du véhicule. La tête déforme d'abord le capot, et vient ensuite impacter la protubérance 5 bombée de l'écran 1 de protection, ladite protubérance 5 se déformant sous l'impact du choc. La tête évite ainsi d'impacter directement le moteur 2, en étant amortie par la protubérance 5 qui se déforme puis éventuellement se rompt.

## Revendications

1. Ecran (1) de protection recouvrant la partie haute d'un moteur (2) à combustion interne d'un véhicule automobile, et comprenant une protubérance (5) bombée et creuse, **caractérisée en ce que** ledit écran (1) possède une assise (3) périphérique constituée par un matériau rigide, la protubérance (5) étant constituée par un matériau déformable pour amortir le choc d'un piéton.

2. Ecran selon la revendication 1, **caractérisé en ce que** la protubérance (5) est placée en position centrale au sein de l'écran (1).

3. Ecran selon l'une quelconque des revendications 1 ou 2, **caractérisé en ce qu'**il s'étend sur le système d'injection du moteur (2).

4. Ecran selon l'une quelconque des revendications 1 à 3, **caractérisé en ce que** le matériau constitutif de l'assise (3) périphérique de l'écran (1) est un polyamide renforcé en fibres de verre.

5. Ecran selon l'une quelconque des revendications 1 à 3, **caractérisé en ce que** le matériau constitutif de l'assise (3) périphérique de l'écran (1) est un polypropylène.

6. Ecran selon l'une quelconque des revendications 4 ou 5, **caractérisé en ce que** le matériau constitutif de la protubérance (5) est un élastomère thermoplastique

7. Ecran selon l'une quelconque des revendications 1 à 6, **caractérisé en ce qu'**il est réalisé par surmoulage du matériau déformable de la protubérance (5) sur le matériau rigide de l'assise (3) périphérique.

8. Ecran selon la revendication 7, **caractérisé en ce que** l'assise (3) de l'écran (1) a globalement la forme d'un cadre rectangulaire rigide, présentant une partie externe (7) et une partie interne (8) de plus faible épaisseur, et le matériau déformable est surmoulé sur ladite assise (3), de part et d'autre de ladite partie interne (8), de sorte que l'assise (3) présente une épaisseur globalement constante et égale à celle de la partie externe (7).

9. Ecran selon l'une quelconque des revendications 1 à 8, **caractérisé en ce que** la protubérance (5) est renforcée par des nervures, de manière à ce qu'elle ne s'affaisse pas à haute température.

10. Moteur (2) à combustion interne de véhicule automobile, **caractérisé en ce qu'**il comprend un écran (1) conforme à l'une quelconque des revendications précédentes.

## Claims

1. Protective screen (1) covering the upper part of an internal combustion engine (2) of a motor vehicle and comprising a hollow domed protuberance (5), **characterized in that** the said screen (1) has a peripheral base (3) formed by a rigid material, the protuberance (5) being formed by a deformable material in order to absorb the impact of a pedestrian.

2. Screen according to Claim 1, **characterized in that** the protuberance (5) is placed in a central position within the screen (1).

3. Screen according to either one of Claims 1 and 2, **characterized in that** it extends over the injection system of the engine (2).

4. Screen according to any one of Claims 1 to 3, **characterized in that** the material constituting the peripheral base (3) of the screen (1) is a glass-fibre-reinforced fully amide.

5. Screen according to any one of Claims 1 to 3, **characterized in that** the material constituting the peripheral base (3) of the screen (1) is a polypropylene.

6. Screen according to either one of Claims 4 and 5, **characterized in that** the material constituting the protuberance (5) is a thermoplastic elastomer.

7. Screen according to any one of Claims 1 to 6, **characterized in that** it is produced by overmoulding for the deformable material of the protuberance (5) onto the rigid material of the peripheral base (3).

8. Screen according to Claim 7, **characterized in that** the base (3) of the screen (1) has overall the shape of a rigid rectangular frame having an external part (7) and a thinner internal part (8), and the deformable material is overmoulded onto the said base (3), on either side of the said internal part (8), such that the base (3) has an overall constant thickness equal to the thickness of the external part (7).

9. Screen according to any one of Claims 1 to 8, **characterized in that** the protuberance (5) is reinforced by ribs so as not to subside at a high temperature.

10. Motor vehicle internal combustion engine (2), **characterized in that** it comprises a screen (1) according to any one of the preceding claims.

## Patentansprüche

1. Schutzschirm (1), der das Oberteil einer Brennkraftmaschine (2) eines Kraftfahrzeugs bedeckt, und umfassend eine gewölbte und hohle Ausbeulung (5), **dadurch gekennzeichnet, dass** dieser Schutzschirm (1) eine Umfangsbasis (3) aufweist, die aus einem steifen Material besteht, wobei die Ausbeulung (5) aus einem verformbaren Material besteht, um den Aufprall eines Fußgängers zu dämpfen.

2. Schutzschirm nach Anspruch 1, **dadurch gekennzeichnet, dass** die Ausbeulung (5) mittig innerhalb des Schutzschirms (1) angeordnet ist.

3. Schutzschirm nach einem der Ansprüche 1 oder 2, **dadurch gekennzeichnet, dass** er sich auf der Einspritzanlage der Brennkraftmaschine (2) erstreckt.

4. Schutzschirm nach einem der Ansprüche 1 bis 3, **dadurch gekennzeichnet, dass** das Bestandsmaterial der Umfangsbasis (3) des Schutzschirms (1) ein glasfaserverstärktes Polyamid ist.

5. Schutzschirm nach einem der Ansprüche 1 bis 3,
**dadurch gekennzeichnet, dass** das Bestandsmaterial der Umfangsbasis (3) des Schutzschirms (1) ein Polypropylen ist.

6. Schutzschirm nach einem der Ansprüche 4 oder 5, **dadurch gekennzeichnet, dass** das Bestandsmaterial der Ausbeulung (5) ein thermoplastisches Elastomer ist.

7. Schutzschirm nach einem der Ansprüche 1 bis 6, **dadurch gekennzeichnet, dass** es durch Abformen des verformbaren Materials der Ausbeulung (5) auf dem steifen Material der Umfangsbasis (3) hergestellt wird.

8. Schutzschirm nach Anspruch 7, **dadurch gekennzeichnet, dass** die Basis (3) des Schutzschirms (1) als Ganzes die Form eines starren rechteckigen Rahmens hat, der einen äußeren Abschnitt (7) und einen inneren Abschnitt (8) mit geringerer Dicke aufweist, und dass das verformbare Material beiderseits dieses inneren Abschnitts (8) derart auf der Basis (3) abgeformt ist, dass die Basis (3) eine Dicke aufweist, die insgesamt konstant ist und der des äußeren Abschnitts (7) entspricht.

9. Schutzschirm nach einem der Ansprüche 1 bis 8, **dadurch gekennzeichnet, dass** die Ausbeulung (5) durch Rippen derart verstärkt ist, dass sie sich nicht bei hoher Temperatur absenkt.

10. Brennkraftmaschine (2) eines Kraftfahrzeugs, **dadurch gekennzeichnet, dass** sie einen Schutzschirm (1) nach einem der vorherigen Ansprüche aufweist.
